# EUROPÄISCHE PATENTSCHRIFT

(11) **EP 4 174 720 B1**
(45) Veröffentlichungstag und Bekanntmachung des Hinweises auf die Patenterteilung: **15.01.2025**
(21) Anmeldenummer: 21205071.0
(22) Anmeldetag: 27.10.2021
(51) Int. Cl.: G06N 3/02, G06N 20/20, G06N 3/086, G06N 3/088

(54) **VERFAHREN UND STEUEREINRICHTUNG ZUM STEUERN EINES TECHNISCHEN SYSTEMS**
METHOD AND CONTROL DEVICE FOR CONTROLLING A TECHNICAL SYSTEM
PROCÉDÉ ET DISPOSITIF DE COMMANDE D'UN SYSTÈME TECHNIQUE

(43) Veröffentlichungstag der Anmeldung: 03.05.2023
(73) Patentinhaber: Siemens Aktiengesellschaft, 80333 München (DE)
(72) Erfinder: Swazinna, Phillip, 85375 Neufahrn (DE); Otte, Clemens, 81739 München (DE); Schöner, Holger, 81739 München (DE); Udluft, Steffen, 82223 Eichenau (DE)
(74) Vertreter: Siemens Patent Attorneys

(56) Entgegenhaltungen:
- DE-A1- 102012 216 574
- DE-A1- 102016 224 207
- PHILLIP SWAZINNA ET AL: "Overcoming Model Bias for Robust Offline Deep Reinforcement Learning", ARXIV.ORG, CORNELL UNIVERSITY LIBRARY, 201 OLIN LIBRARY CORNELL UNIVERSITY ITHACA, NY 14853, 22 July 2021 (2021-07-22), XP081999699
- TATSUYA MATSUSHIMA ET AL: "Deployment-Efficient Reinforcement Learning via Model-Based Offline Optimization", ARXIV.ORG, 23 June 2020 (2020-06-23), XP081692404
- WANG YUE ET AL: "Competitive Multi-agent Deep Reinforcement Learning with Counterfactual Thinking", 2019 IEEE INTERNATIONAL CONFERENCE ON DATA MINING (ICDM), IEEE, 8 November 2019 (2019-11-08), pages 1366 - 1371, XP033700541, DOI: 10.1109/ICDM.2019.00175

## Beschreibung

Zum Steuern von komplexen technischen Systemen, wie z.B. Gasturbinen, Windturbinen, Dampfturbinen, Motoren, Robotern, chemischen Reaktoren, Fräsmaschinen, Fertigungsanlagen, Kühlanlagen oder Heizungsanlagen, werden im zunehmenden Maße datengetriebene Verfahren des maschinellen Lernens eingesetzt. Hierbei werden insbesondere künstliche neuronale Netze mittels Verfahren des bestärkenden Lernens (Reinforcement Learning) darauf trainiert, für einen jeweiligen Zustand des technischen Systems eine zustandsspezifische Steueraktion zum Steuern des technischen Systems zu generieren, durch die eine Performanz des technischen Systems optimiert wird. Ein solcher zum Steuern eines technischen Systems optimierter Steuerungsagent wird häufig auch als Policy oder kurz als Agent bezeichnet.

Für eine erfolgreiche Optimierung eines Steuerungsagenten werden in der Regel große Mengen von Betriebsdaten des technischen Systems als Trainingsdaten benötigt. Die Trainingsdaten sollten dabei die Betriebszustände und andere Betriebsbedingungen des technischen Systems möglichst repräsentativ abdecken.

In vielen Fällen liegen derartige Trainingsdaten in Form von Datenbanken vor, in denen am technischen System aufgezeichnete Betriebsdaten gespeichert sind. Derartige gespeicherte Trainingsdaten werden häufig auch als Batch-Trainingsdaten oder Offline-Trainingsdaten bezeichnet. Erfahrungsgemäß hängt ein Trainingserfolg in der Regel davon ab, inwieweit die möglichen Betriebsbedingungen des technischen Systems durch die Batch-Trainingsdaten abgedeckt sind. Entsprechend ist damit zu rechnen, dass sich mit Batch-Trainingsdaten trainierte Steuerungsagenten in solchen Betriebszuständen ungünstig verhalten, für die nur wenige Batch-Trainingsdaten vorhanden waren.

Zur Verbesserung des Steuerverhaltens in von Trainingsdaten wenig abgedeckten Bereichen des Zustandsraums wird in der Publikation "Deployment-Efficient Reinforcement Learning via Model-Based Offline Optimization" von Tatsuya Matsushima, Hiroki Furuta, Yutaka Matsuo, Ofir Nachum und Shixiang Gu auf https://arxiv.org/abs/2006.03647 (abgerufen am 8. Oktober 2021) ein rekursives Lernverfahren vorgeschlagen. Dieses Verfahren liefert allerdings stochastische Policies, die zum gleichen Betriebszustand mitunter sehr unterschiedliche und nicht sicher vorhersehbare Steueraktionen ausgeben können. Auf diese Weise kann zwar der Zustandsraum effizient exploriert werden, doch sind derartige stochastische Policies auf vielen technischen Systemen nicht zulässig, insofern sie im Voraus nicht sicher validiert werden können. Die Offenbarung DE 10 2016 224207 A1 (SIEMENS AG [DE]), betrifft ein Computerimplementiertes Verfahren zum Steuern eines technischen Systems, wobei Trainingsdaten eingelesen werden, wobei ein jeweiliger Trainingsdatensatz einen einen Zustand des technischen Systems spezifizierenden Zustandsdatensatz, einen eine Steueraktion spezifizierenden Aktionsdatensatz sowie einen aus einer Anwendung der Steueraktion resultierenden Performanzwert des technischen Systems umfasst, sowie ein erstes Maschinenlernmodul, welches anhand der Trainingsdaten darauf trainiert wird, anhand eines Zustandsdatensatzes und eines Aktionsdatensatzes einen resultierenden Performanzwert zu reproduzieren, und einen Steuerungsagenten zur Steuerung des technischen Systems.

Es ist Aufgabe der vorliegenden Erfindung, ein Verfahren und eine Steuereinrichtung zum Steuern eines technischen Systems anzugeben, die eine Exploration eines Zustandsraums des technischen Systems erlauben und dabei deterministische Steuerungsagenten verwenden.

Gelöst wird diese Aufgabe durch ein Verfahren mit den Merkmalen des Patentanspruchs 1, durch eine Steuereinrichtung mit den Merkmalen des Patentanspruchs 12, durch ein Computerprogrammprodukt mit den Merkmalen des Patentanspruchs 13 sowie durch ein computerlesbares Speichermedium mit den Merkmalen des Patentanspruchs 14.

Zum Steuern eines technischen Systems werden Trainingsdaten eingelesen, wobei ein jeweiliger Trainingsdatensatz einen einen Zustand des technischen Systems spezifizierenden Zustandsdatensatz, einen eine Steueraktion spezifizierenden Aktionsdatensatz sowie einen aus einer Anwendung der Steueraktion resultierenden Performanzwert des technischen Systems umfasst. Unter dem Begriff Steuern sei dabei auch ein Regeln des technischen Systems verstanden. Anhand der Trainingsdaten wird ein erstes Maschinenlernmodul darauf trainiert, anhand eines Zustandsdatensatzes und eines Aktionsdatensatzes einen resultierenden Performanzwert zu reproduzieren. Weiterhin werden einer Vielzahl von unterschiedlichen deterministischen Steuerungsagenten jeweils Zustandsdatensätze zugeführt und resultierende Ausgabedaten als Aktionsdatensätze in das trainierte erste Maschinenlernmodul eingespeist. Abhängig von durch das trainierte erste Maschinenlernmodul ausgegebenen Performanzwerten werden dann mehrere der Steuerungsagenten selektiert. Erfindungsgemäß wird das technische System durch die selektierten Steuerungsagenten jeweils gesteuert, wobei weitere Zustandsdatensätze, Aktionsdatensätze und Performanzwerte erfasst und zu den Trainingsdaten hinzugefügt werden. Mit den so ergänzten Trainingsdaten werden die obigen Verfahrensschritte ab dem Training des ersten Maschinenlernmoduls wiederholt.

Zum Ausführen des erfindungsgemäßen Verfahrens sind eine entsprechende Steuereinrichtung, ein Computerprogrammprodukt sowie ein computerlesbares, vorzugsweise nichtflüchtiges Speichermedium vorgesehen.

Das erfindungsgemäße Verfahren sowie die erfindungsgemäße Steuereinrichtung können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden.

Ein Vorteil der Erfindung ist insbesondere darin zu sehen, dass aufgrund der Steuerung des technischen Systems durch mehrere unterschiedliche und iterativ adaptierte Steuerungsagenten eine wirksame Exploration eines Zustandsraums des technischen Systems ermöglicht wird. Auf diese Weise können negative Auswirkungen von schlecht durch Trainingsdaten abgedeckten Bereichen des Zustandsraum effektiv verringert werden. Gleichzeitig können durch eine Beschränkung auf deterministische Steuerungsagenten Validierungsprobleme stochastischer Steuerungsagenten vermieden werden.

Vorteilhafte Ausführungsformen und Weiterbildungen der Erfindung sind in den abhängigen Ansprüchen angegeben.

Gemäß einer vorteilhaften Ausführungsform der Erfindung kann ein zweites Maschinenlernmodul darauf trainiert sein oder anhand der Trainingsdaten darauf trainiert werden, anhand eines Zustandsdatensatzes einen Aktionsdatensatz zu reproduzieren. Die Steuerungsagenten können jeweils mit dem zweiten Maschinenlernmodul verglichen werden, wobei jeweils ein eine Verschiedenheit zwischen dem jeweiligen Steuerungsagenten und dem zweiten Maschinenlernmodul quantifizierender Abstand ermittelt wird. Damit kann ein Steuerungsagent mit einem kleineren Abstand zum zweiten Maschinenlernmodul gegenüber einem Steuerungsagenten mit einem größeren Abstand bevorzugt selektiert werden. Als Abstand kann insbesondere bei künstlichen neuronalen Netzen ein Abstand zwischen neuronalen Gewichten eines jeweiligen Steuerungsagenten und neuronalen Gewichten des zweiten Maschinenlernmoduls ermittelt werden. Vorzugsweise kann ein ggf. gewichteter euklidischer Abstand zwischen Vektordarstellungen dieser neuronalen Gewichte ermittelt werden.

Insbesondere kann der Abstand eines jeweiligen Steuerungsagenten mit einem Schwellwert verglichen werden. Der jeweilige Steuerungsagent kann dann von der Selektion ausgeschlossen werden, falls der Schwellwert überschritten wird. Eine Vorbedingung für die Selektion eines Steuerungsagenten kann damit formuliert werden als |N2 - NP| <= TH, wobei TH den Schwellwert, N2 einen Vektor neuronaler Gewichte des zweiten Maschinenlernmoduls und NP einen Vektor neuronaler Gewichte des betreffenden Steuerungsagenten darstellt. Auf diese Weise kann die Steuerung des technischen Systems auf Steuerungsagenten beschränkt werden, die sich vom zweiten Maschinenlernmodul nicht allzu sehr unterscheiden. In vielen Fällen können so Steuerungsagenten wirksam ausgeschlossen werden, die unzulässige oder schwer nachteilige Steueraktionen ausgeben.

Vorteilhafterweise kann dabei der Schwellwert beim Wiederholen der Verfahrensschritte erhöht werden. Auf diese Weise kann die Exploration des Zustandsraums des technischen Systems im Laufe des iterativen Trainings verbessert werden.

Nach einer weiteren vorteilhaften Ausführungsform der Erfindung kann die Vielzahl von Steuerungsagenten durch einen Modellgenerator generiert werden. In diesem Zusammenhang können mehrere der generierten Steuerungsagenten mit anderen Steuerungsagenten verglichen werden, wobei jeweils ein eine Verschiedenheit zwischen den verglichenen Steuerungsagenten quantifizierender Abstand ermittelt wird. Vorteilhafterweise kann dann ein Steuerungsagent mit einem größeren Abstand zu einem oder mehreren anderen Steuerungsagenten gegenüber einem Steuerungsagenten mit einem kleineren Abstand bevorzugt selektiert und/oder generiert werden. Damit können Steuerungsagenten bereitgestellt werden, die untereinander eine hohe Diversität aufweisen. Auf diese Weise können unterschiedliche Bereiche des Zustandsraums parallel und damit effizienter exploriert werden.

Nach einer vorteilhaften Weiterbildung der Erfindung können die Steuerungsagenten anhand der Trainingsdaten darauf trainiert werden, anhand eines Zustandsdatensatzes einen eine performanzoptimierende Steueraktion spezifizierenden Aktionsdatensatz zu reproduzieren. Neben der Selektion kann durch ein solches zusätzliches Training in vielen Fällen die Performanz der selektierten Steuerungsagenten weiter verbessert werden.

Nach einer weiteren vorteilhaften Weiterbildung der Erfindung kann ein jeweiliger Trainingsdatensatz einen Folgezustandsdatensatz umfassen, der einen aus einer Anwendung einer Steueraktion resultierenden Folgezustand des technischen Systems spezifiziert. Das erste Maschinenlernmodul kann dann anhand der Trainingsdaten darauf trainiert werden, anhand eines Zustandsdatensatzes und eines Aktionsdatensatzes einen resultierenden Folgezustandsdatensatz zu reproduzieren. Weiterhin kann ein zweites Maschinenlernmodul anhand der Trainingsdaten darauf trainiert werden, anhand eines Zustandsdatensatzes einen Aktionsdatensatz zu reproduzieren. Durch das trainierte erste Maschinenlernmodul kann dann für einen vom jeweiligen Steuerungsagenten ausgegebenen Aktionsdatensatz ein Folgezustandsdatensatz ermittelt und in das trainierte zweite Maschinenlernmodul eingespeist werden. Ein daraus resultierender Folgeaktionsdatensatz kann wiederum zusammen mit dem Folgezustandsdatensatz in das trainierte erste Maschinenlernmodul eingespeist werden. Schließlich kann ein daraus resultierender Performanzwert für den Folgezustand bei der Selektion der Steuerungsagenten berücksichtigt werden. Auf diese Weise kann ein Zustand und eine Steueraktion schrittweise in die Zukunft extrapoliert bzw. vorhergesagt werden, so dass eine mehrere Zeitschritte umfassende Steuertrajektorie ermittelt werden kann. Eine solche Extrapolation wird häufig auch als Roll-Out oder virtueller Roll-Out bezeichnet. Für die Steuertrajektorie kann dann eine über mehrere Zeitschritte kumulierte Performanz berechnet und vorzugsweise der Steueraktion am Anfang der Trajektorie zugeordnet werden. Eine solche kumulierte Performanz wird im Zusammenhang des bestärkenden Lernens häufig auch als "Return" bezeichnet. Zur Berechnung des Returns können die für zukünftige Zeitschritte ermittelten Performanzwerte diskontiert, d.h. mit für jeden Zeitschritt kleiner werdenden Gewichten versehen werden.

Ein Ausführungsbeispiel der Erfindung wird nachfolgend anhand der Zeichnung näher erläutert. Dabei veranschaulichen jeweils in schematischer Darstellung:
Figur 1 eine erfindungsgemäße Steuereinrichtung beim Steuern eines technischen Systems,
Figur 2 ein Training eines ersten Maschinenlernmoduls für das technische System,
Figur 3 ein Training eines zweiten Maschinenlernmoduls für das technische System,
Figur 4 eine Ermittlung einer Performanz eines Steuerungsagenten und
Figur 5 eine Optimierung von Steuerungsagenten für das technische System.

Insofern in verschiedenen Figuren gleiche oder korrespondierende Bezugszeichen verwendet werden, bezeichnen diese Bezugszeichen die gleichen oder korrespondierende Entitäten, die insbesondere wie im Zusammenhang mit der betreffenden Figur beschrieben, implementiert oder ausgestaltet sein können.

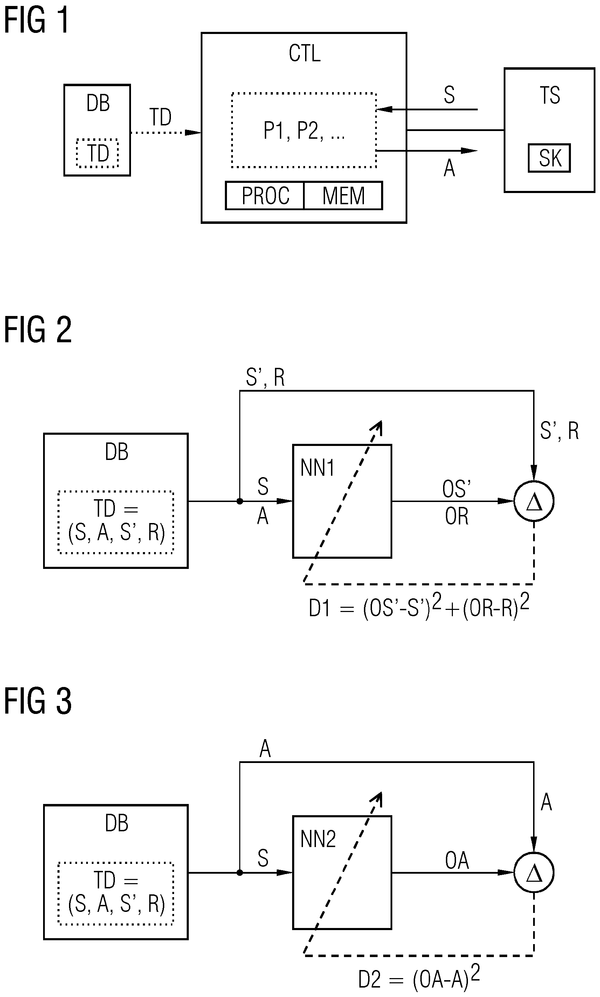

Figur 1 veranschaulicht eine erfindungsgemäße Steuereinrichtung CTL beim Steuern eines technischen Systems TS, z. B. einer Gasturbine, einer Windturbine, einer Dampfturbine, eines chemischen Reaktors, einer Fräsmaschine, einer Werkzeugmaschine, einer Fertigungsanlage, einer Fabrik, eines Roboters, eines Kraftfahrzeugs, eines Motors, einer Kühlanlage, einer Heizungsanlage, einer Energieanlage oder einer anderen Maschine, eines anderen Geräts oder einer anderen Anlage. Insbesondere kann auch eine Komponente oder ein Teilsystem eines zusammengesetzten technischen Systems als technisches System TS aufgefasst werden.

Das technische System TS verfügt über eine Sensorik SK zum vorzugsweise fortlaufenden Erfassen und/oder Messen von Systemzuständen oder Teilsystemzuständen des technischen Systems TS. Für das vorliegende Ausführungsbeispiel sei angenommen, dass als technisches System TS eine Werkzeugmaschine gesteuert wird.

Die Steuereinrichtung CTL ist in Figur 1 extern zum technischen System TS dargestellt und mit diesem gekoppelt. Alternativ kann die Steuereinrichtung CTL auch ganz oder teilweise in das technische System TS integriert sein.

Die Steuereinrichtung CTL verfügt über einen oder mehrere Prozessoren PROC zum Ausführen von Verfahrensschritten der Steuereinrichtung CTL sowie über einen oder mehrere mit dem Prozessor PROC gekoppelte Speicher MEM zum Speichern der von der Steuereinrichtung CTL zu verarbeitenden Daten.

Weiterhin weist die Steuereinrichtung CTL einen oder mehrere deterministische Steuerungsagenten P1, P2, ... zum Steuern des technischen Systems TS auf. Im vorliegenden Ausführungsbeispiel sind mehrere Steuerungsagenten P1, P2, ... vorgesehen, die jeweils als künstliches neuronales Netz implementiert und durch Verfahren des bestärkenden Lernens trainierbar sind. Ein solcher Steuerungsagent wird häufig auch als Policy oder kurz Agent bezeichnet. Ein deterministischer Steuerungsagent ist dadurch gekennzeichnet, dass er bei gleichen Eingabedaten gleiche Ausgabedaten ausgibt.

Die Steuerungsagenten P1, P2, ... und damit die Steuereinrichtung CTL werden vorab anhand von Trainingsdaten datengetrieben trainiert und/oder selektiert und so zum optimierten Steuern des technischen Systems TS konfiguriert. Die Trainingsdaten zum Training und/oder Selektieren der Steuerungsagenten P1, P2, ... werden einer Datenbank DB entnommen, in der die Trainingsdaten in Form einer Vielzahl von Trainingsdatensätzen TD gespeichert sind. Die gespeicherten Trainingsdatensätze TD werden vorab am technischen System TS oder einem dazu ähnlichen technischen System aufgezeichnet und/oder simulativ oder datengetrieben generiert.

Auf der Grundlage dieser Trainingsdaten werden die Steuerungsagenten P1, P2, ... darauf trainiert und/oder dahingehend selektiert, zu einem jeweils vorgegebenen Zustand des technischen Systems TS eine Steueraktion zu ermitteln, die eine Performanz des technischen Systems TS optimiert. Die zu optimierende Performanz kann dabei insbesondere eine Leistung, ein Ertrag, eine Geschwindigkeit, ein Gewicht, eine Laufzeit, eine Präzision, eine Fehlerrate, einen Ressourcenverbrauch, einen Wirkungsgrad, eine Effizienz, einen Schadstoffausstoß, eine Stabilität, einen Verschleiß, eine Lebensdauer, eine physikalische Eigenschaft, eine mechanische Eigenschaft, eine elektrische Eigenschaft, eine einzuhaltende Nebenbedingung oder andere zu optimierende Zielgrößen des technischen Systems TS oder einer seiner Komponenten betreffen.

Ein Ablauf dieses Trainings wird unten näher erläutert.

Nach abgeschlossenem Training können die trainierten und/oder selektierten Steuerungsagenten P1, P2, ... zum optimierten Steuern des technischen Systems TS eingesetzt werden. Zu diesem Zweck werden aktuelle Betriebszustände und/oder andere Betriebsbedingungen des technischen Systems TS durch die Sensorik SK fortlaufend gemessen oder anderweitig ermittelt und in Form von Zustandsdatensätzen S vom technischen System TS zur Steuereinrichtung CTL übermittelt. Alternativ oder zusätzlich können die Zustandsdatensätze S zumindest teilweise mittels eines Simulators, insbesondere eines digitalen Zwillings des technischen Systems TS simulativ ermittelt werden.

Ein jeweiliger Zustandsdatensatz S spezifiziert einen Zustand des technischen Systems TS und wird vorzugsweise durch einen numerischen Zustandsvektor dargestellt. Die Zustandsdatensätze S können Messdaten, Sensordaten, Umgebungsdaten oder andere im Betrieb des technischen Systems TS anfallende oder den Betrieb beeinflussende Daten umfassen, insbesondere Daten über Aktorstellungen, auftretende Kräfte, Leistung, Druck, Temperatur, Ventilpositionen, Emissionen und/oder Ressourcenverbrauch des technischen Systems TS oder einer seiner Komponenten. Bei Produktionsanlagen können die Zustandsdatensätze S auch eine Produktqualität oder andere Produkteigenschaften betreffen.

Die zur Steuereinrichtung CTL übermittelten Zustandsdatensätze S werden in einen oder mehrere der trainierten Steuerungsagenten P1, P2, ... als Eingabedaten eingespeist. Die Steuerungsagenten P1, P2, ... können abwechselnd zum Steuern des technischen Systems TS eingesetzt werden oder abhängig von einem Zustand oder anderen Betriebsbedingungen des technischen Systems TS angesteuert werden.

Anhand eines jeweils zugeführten Zustandsdatensatzes S generiert ein aktuell steuernder Steuerungsagent P1 bzw. P2, ... eine performanzoptimierende Steueraktion in Form eines Aktionsdatensatzes A. Durch den Aktionsdatensatz A wird eine am technischen System TS vornehmbare Steueraktion spezifiziert. Insbesondere können durch den Aktionsdatensatz A Stellgrößen des technischen Systems TS spezifiziert werden, z. B. zum Einstellen einer Gaszufuhr bei einer Gasturbine oder zum Ausführen einer Bewegungstrajektorie bei einem Roboter.

Die generierten Aktionsdatensätze A werden von der Steuereinrichtung CTL zum technischen System TS übermittelt und von diesem ausgeführt. Auf diese Weise wird das technische System TS in einer für den aktuellen Betriebszustand optimierten Weise gesteuert.

Figur 2 veranschaulicht ein Training eines ersten Maschinenlernmoduls NN1 für das technische System TS. Das erste Maschinenlernmodul NN1 ist datengetrieben trainierbar und soll einen Zustandsübergang bei Anwendung einer Steueraktion auf einen vorgegebenen Zustand des technischen Systems TS modellieren. Ein solches Maschinenlernmodul wird häufig auch als Transitionsmodell oder Systemmodell bezeichnet.

Das erste Maschinenlernmodul NN1 kann in der Steuereinrichtung CTL oder ganz oder teilweise extern dazu implementiert sein. Im vorliegenden Ausführungsbeispiel ist das erste Maschinenlernmodul NN1 als künstliches neuronales Netz, insbesondere als neuronales Feedforward-Netz implementiert.

Das erste Maschinenlernmodul NN1 soll anhand der in der Datenbank DB enthaltenen Trainingsdatensätze TD darauf trainiert werden, anhand eines jeweiligen Zustands und einer jeweiligen Steueraktion einen aus Anwendung der Steueraktion resultierenden Folgezustand des technischen Systems TS sowie einen daraus resultierenden Performanzwert möglichst genau vorherzusagen.

Das Training des ersten Maschinenlernmoduls NN1 erfolgt anhand der in der Datenbank DB gespeicherten Trainingsdatensätze TD. Ein jeweiliger Trainingsdatensatz TD umfasst hierbei einen Zustandsdatensatz S, einen Aktionsdatensatz A, einen Folgezustandsdatensatz S' sowie einen Performanzwert R. Wie oben bereits erwähnt, spezifizieren die Zustandsdatensätze S jeweils einen Zustand des technischen Systems TS und die Aktionsdatensätze A jeweils eine am technischen System TS vornehmbare Steueraktion. Entsprechend wird durch einen jeweiligen Folgezustandsdatensatz S' ein aus Anwendung der jeweiligen Steueraktion auf den jeweiligen Zustand resultierender Folgezustand, d. h. ein in einem nachfolgenden Zeitschritt eingenommener Systemzustand des technischen Systems TS spezifiziert. Der jeweils zugehörige Performanzwert R quantifiziert schließlich die jeweilige Performanz einer Ausführung der jeweiligen Steueraktion im jeweiligen Zustand. Wie oben schon angedeutet, kann der Performanzwert R hierbei insbesondere eine resultierende Leistung, einen resultierenden Emissionswert, einen resultierenden Ressourcenverbrauch, eine resultierende Produktqualität und/oder andere aus einer Vornahme der Steueraktion resultierende Betriebsparameter des technischen Systems TS betreffen. Ein solcher Performanzwert wird im Zusammenhang des maschinellen Lernens auch mit den Begriffen Belohnung, Reward oder - komplementär dazu - Kosten oder Loss bezeichnet.

Zum Training des ersten Maschinenlernmoduls NN1 werden diesem Zustandsdatensätze S sowie Aktionsdatensätze A als Eingabedaten zugeführt. Das erste Maschinenlernmodul NN1 soll so trainiert werden, dass dessen Ausgabedaten einen jeweils resultierenden Folgezustand sowie einen jeweils resultierenden Performanzwert möglichst genau reproduzieren. Das Training erfolgt vorzugsweise mittels eines Verfahrens des überwachten maschinellen Lernens.

Unter einem Training sei hierbei allgemein eine Optimierung einer Abbildung von Eingabedaten, hier S und A, eines Maschinenlernmoduls auf dessen Ausgabedaten verstanden. Diese Abbildung wird nach vorgegebenen gelernten und/oder zu lernenden Kriterien während einer Trainingsphase optimiert. Als Kriterien können insbesondere bei Prädiktionsmodellen ein Prädiktionsfehler und bei Steuermodellen ein Erfolg einer Steueraktion herangezogen werden. Durch das Training können beispielsweise Vernetzungsstrukturen von Neuronen eines neuronalen Netzes und/oder Gewichte von Verbindungen zwischen den Neuronen so eingestellt bzw. optimiert werden, dass die vorgegebenen Kriterien möglichst gut erfüllt werden. Das Training kann somit als Optimierungsproblem aufgefasst werden. Für derartige Optimierungsprobleme auf dem Gebiet des maschinellen Lernens sind eine Vielzahl von effizienten Optimierungsverfahren verfügbar, insbesondere gradientenbasierte Optimierungsverfahren, gradientenfreie Optimierungsverfahren, Rückpropagationsverfahren, Partikelschwarmoptimierungen, genetische Optimierungsverfahren und/oder populationsbasierte Optimierungsverfahren.

Trainieren lassen sich so insbesondere künstliche neuronale Netze, rekurrente neuronale Netze, faltende neuronale Netze, Perzeptrone, bayessche neuronale Netze, Autoencoder, variationale Autoencoder, Gaußprozesse, Deep-Learning-Architekturen, Support-Vektor-Maschinen, datengetriebene Regressionsmodelle, K-nächste-Nachbarn-Klassifikatoren, physikalische Modelle oder Entscheidungsbäume.

Im Fall des ersten Maschinenlernmoduls NN1 werden diesem - wie oben schon erwähnt - Zustandsdatensätze S sowie Aktionsdatensätze A aus den Trainingsdaten als Eingabedaten zugeführt. Zu einem jeweiligen Paar (S, A) von Eingabedatensätzen werden durch das erste Maschinenlernmodul NN1 ein Ausgabedatensatz OS' als prädizierter Folgezustandsdatensatz sowie ein Ausgabedatensatz OR als prädizierter Performanzwert ausgegeben. Durch das Training des ersten Maschinenlernmoduls NN1 wird angestrebt, dass die Ausgabedatensätze OS' mit den tatsächlichen Folgezustandsdatensätzen S' sowie die Ausgabedatensätze OR mit den tatsächlichen Performanzwerten R möglichst gut übereinstimmen.

Zu diesem Zweck wird eine Abweichung D1 zwischen den Ausgabedatensätzen (OS', OR) und den korrespondierenden, in den Trainingsdaten enthaltenen Datensätze (S', R) ermittelt. Die Abweichung D1 kann hierbei als Reproduktionsfehler oder Prädiktionsfehler des ersten Maschinenlernmoduls NN1 aufgefasst werden. Der Reproduktionsfehler D1 kann insbesondere durch Berechnung eines euklidischen Abstands zwischen den jeweils darstellenden Vektoren ermittelt werden, z. B. gemäß D1 = (OS' - S')² + (OR - R)².

Der Reproduktionsfehler D1 wird, wie in Figur 2 durch einen strichlierten Pfeil angedeutet, zum ersten Maschinenlernmodul NN1 zurückgeführt. Anhand des zurückgeführten Reproduktionsfehlers D1 wird das erste Maschinenlernmodul NN1 darauf trainiert, den Reproduktionsfehler D1 zumindest im Mittel zu minimieren. Zur Minimierung des Reproduktionsfehlers D1 ist eine Vielzahl von effizienten Optimierungsverfahren verfügbar. Durch die Minimierung des Reproduktionsfehlers wird das erste Maschinenlernmodul NN1 darauf trainiert zu einem vorgegebenen Zustand und einer vorgegebenen Steueraktion einen resultierenden Folgezustand sowie einen resultierenden Performanzwert möglichst gut vorherzusagen.

Figur 3 veranschaulicht ein Training eines zweiten Maschinenlernmoduls NN2 für das technische System TS. Das zweite Maschinenlernmodul NN2 kann in der Steuereinrichtung CTL oder ganz oder teilweise extern dazu implementiert sein. Im vorliegenden Ausführungsbeispiel ist das zweite Maschinenlernmodul NN2 als künstliches neuronales Netz, insbesondere als sogenanntes Feedforward-Netz implementiert. Das zweite Maschinenlernmodul NN2 ist datengetrieben trainierbar und soll anhand der in der Datenbank DB gespeicherten Trainingsdatensätze TD darauf trainiert werden, anhand eines jeweiligen Zustands eine zugehörige Steueraktion vorherzusagen.

Zu diesem Zweck werden dem zweiten Maschinenlernmodul NN2 die in den Trainingsdatensätzen TD enthaltenen Zustandsdatensätze S als Eingabedaten zugeführt, aus denen das zweite Maschinenlernmodul NN2 Ausgabedaten OA ableitet. Das zweite Maschinenlernmodul NN2 soll so trainiert werden, dass die aus einem jeweiligen Zustandsdatensatz S eines jeweiligen Trainingsdatensatzes TD abgeleiteten Ausgabedaten OA den im selben Trainingsdatensatz TD enthaltenen jeweiligen Aktionsdatensatz A zumindest im Mittel möglichst genau reproduzieren. Zu diesem Zweck wird eine Abweichung D2 zwischen den Ausgabedatensätzen OA und den korrespondierenden Aktionsdatensätzen A ermittelt. Die Abweichung D2 kann als Reproduktionsfehler des zweiten Maschinenlernmoduls NN2 aufgefasst werden. Der Reproduktionsfehler D2 kann insbesondere durch Berechnung eines euklidischen Abstands zwischen den jeweils darstellenden Vektoren ermittelt werden, z. B. gemäß D2 = (OA - A)².

Der Reproduktionsfehler D2 wird, wie in Figur 3 durch einen strichlierten Pfeil angedeutet, zum zweiten Maschinenlernmodul NN2 zurückgeführt. Anhand es zurückgeführten Reproduktionsfehlers D2 wird das zweite Maschinenlernmodul NN2 darauf trainiert, diesen Reproduktionsfehler D2 zumindest im Mittel zu minimieren. Hierbei können die gleichen Optimierungsverfahren angewandt werden, wie im Falle des ersten Maschinenlernmoduls NN1.

Durch die Minimierung des Reproduktionsfehlers D2 wird das zweite Maschinenlernmodul NN2 darauf trainiert, zu einem vorgegebenen Zustand eine zugehörige Steueraktion auszugeben.

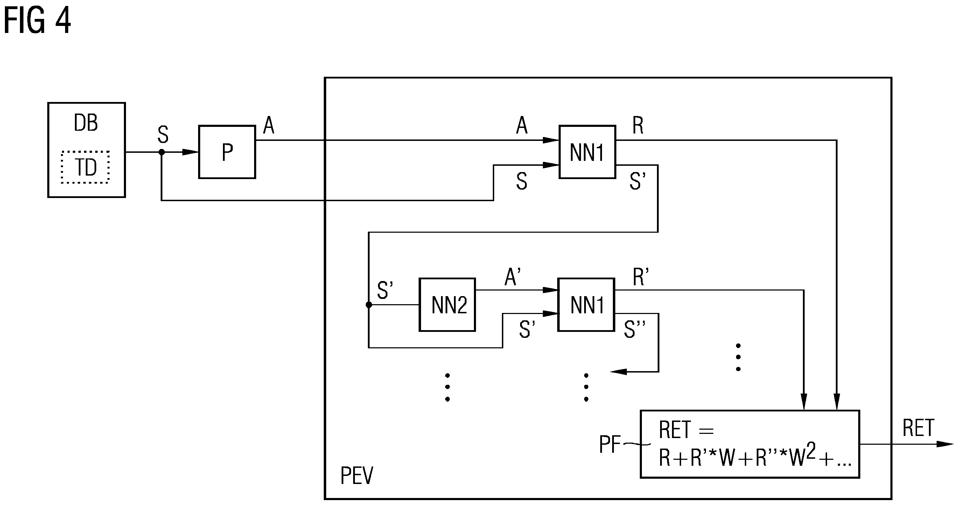

Figur 4 veranschaulicht eine Ermittlung einer Performanz eines Steuerungsagenten P durch einen Performanzbewerter PEV. Der Performanzbewerter PEV umfasst die Maschinenlernmodule NN1 und NN2, die wie oben beschrieben trainiert sind.

Zur Illustration aufeinanderfolgender Verarbeitungsschritte sind in Figur 4 mehrere Instanzen der trainierten Maschinenlernmodule NN1 und NN2 schematisch dargestellt. Die verschiedenen Instanzen können insbesondere verschiedenen Aufrufen oder Auswertungen von Routinen entsprechen, mittels derer die Maschinenlernmodule NN1 und NN2 implementiert sind.

Zur Bewertung der Performanz des Steuerungsagenten P werden Zustandsdatensätze S in den Steuerungsagenten P als Eingabedaten eingespeist. Daraus resultierende, als Aktionsdatensätze aufzufassende Ausgabedaten A des Steuerungsagenten P werden dann zusammen mit den korrespondierenden Zustandsdatensätzen S zum Performanzbewerter PEV übermittelt.

Der Performanzbewerter PEV prädiziert mittels der trainierten Maschinenlernmodule NN1 und NN2 für ein jeweiliges Paar (S, A) eines Zustandsdatensatzes S und eines Aktionsdatensatzes A eine Gesamtperformanz RET, die eine aus Anwendung der Steueraktion A resultierende, über mehrere Zeitschritte in die Zukunft akkumulierte Performanz des technischen Systems TS quantifiziert. Eine solche Gesamtperformanz wird im technischen Umfeld des maschinellen Lernens, insbesondere des bestärkenden Lernens häufig auch als "Return" bezeichnet.

Zur Ermittlung der Gesamtperformanz RET wird der jeweilige Aktionsdatensatz A zusammen mit dem jeweiligen Zustandsdatensatz S in das trainierte erste Maschinenlernmodul NN1 eingespeist, das daraus einen Folgezustand vorhersagt und einen diesen spezifizierenden Folgezustandsdatensatz S' sowie einen zugehörigen Performanzwert R ausgibt. Der Folgezustandsdatensatz S' wird wiederum in das trainierte zweite Maschinenlernmodul NN2 eingespeist, das daraus einen Aktionsdatensatz A' für den Folgezustand ableitet. Der Aktionsdatensatz A' wird zusammen mit dem jeweiligen Folgezustandsdatensatz S' in eine weitere Instanz des ersten Maschinenlernmoduls NN1 eingespeist, das daraus einen weiteren Folgezustand vorhersagt und einen diesen spezifizierenden Folgezustandsdatensatz S" sowie einen zugehörigen Performanzwert R' ausgibt.

Die vorstehenden Verfahrensschritte können iterativ wiederholt werden, wobei Performanzwerte für weitere Folgezustände ermittelt werden. Die Iteration kann bei Vorliegen einer Abbruchbedingung beendet werden, z. B. bei Überschreiten einer vorgegebenen Anzahl von Iterationen. Auf diese Weise kann eine mehrere Zeitschritte umfassende, von Folgezustand zu Folgezustand weiterschreitende Steuertrajektorie mit zugehörigen Performanzwerten R, R', R'', ... ermittelt werden.

Die ermittelten Performanzwerte R, R', R", ... werden einer Performanzfunktion PF zugeführt.

Die Performanzfunktion PF ermittelt für eine jeweilige Steuertrajektorie die über die Steuertrajektorie akkumulierte Gesamtperformanz RET. Die ermittelte Gesamtperformanz RET wird dann der Steueraktion, hier A, am Anfang der Steuertrajektorie zugeordnet. Die Gesamtperformanz RET bewertet so eine Fähigkeit des Steuerungsagenten P zu einem jeweiligen Zustandsdatensatz S eine günstige, performanzoptimierende Steueraktion, hier A, zu ermitteln. Die Gesamtperformanz RET wird durch die Performanzfunktion PF vorzugsweise als über die zukünftigen Zeitschritte einer Steuertrajektorie diskontierte Performanz berechnet.

Zu diesem Zweck wird durch die Performanzfunktion PF vorzugsweise eine gewichtete Summe der Performanzwerte R, R', R'', ... berechnet, deren Gewichte mit jedem Zeitschritt in die Zukunft mit einem Diskontierungsfaktor W < 1 multipliziert werden. Auf diese Weise kann die Gesamtperformanz RET berechnet werden gemäß RET = R + R' * W + R" * W² + ... Für den Diskontierungsfaktor W kann z. B. ein Wert von 0,99 oder 0,9 eingesetzt werden.

Die prädizierte Gesamtperformanz RET wird schließlich durch den Performanzbewerter PEV als Bewertungsergebnis ausgegeben.

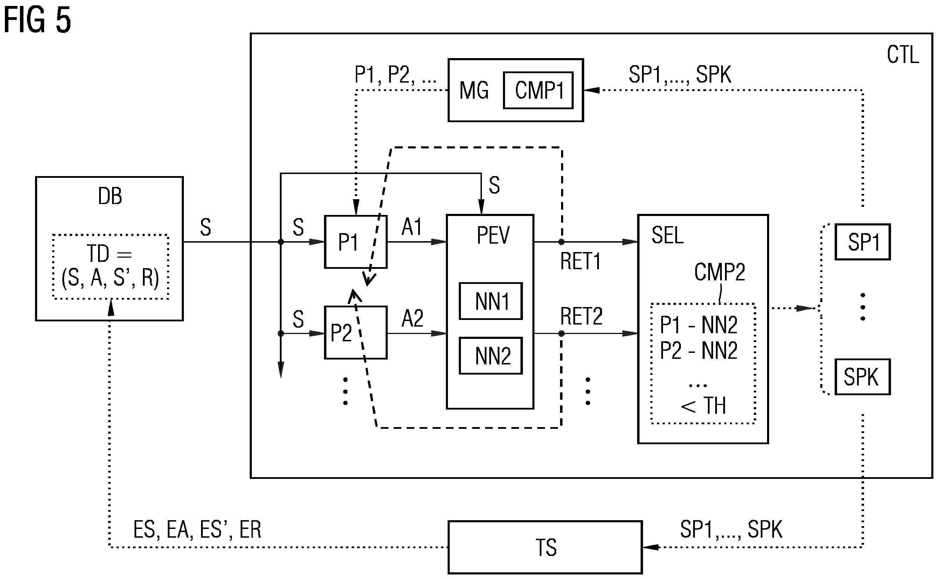

Figur 5 veranschaulicht eine Optimierung von Steuerungsagenten für das technische System TS. Zu diesem Zweck werden der Steuereinrichtung CTL eine Vielzahl von Trainingsdatensätzen TD zugeführt, anhand derer zunächst die Maschinenlernmodule NN1 und NN2, wie oben beschrieben, trainiert werden.

Die Steuereinrichtung CTL verfügt weiter über einen Modellgenerator MG zum Generieren von deterministischen Steuerungsagenten. Letztere sind vorzugsweise als künstliche neuronale Netze implementiert. Als solche sind die Steuerungsagenten durch eine Verknüpfungsstruktur ihrer Neuronen sowie durch Gewichte von Verbindungen zwischen den Neuronen spezifiziert. Ein jeweiliger Steuerungsagent kann vom Modellgenerator MG also generiert werden, indem ein Satz von neuronalen Gewichten und/oder ein eine Neuronenverknüpfung angebender Datensatz erzeugt und ausgegeben wird. Für das vorliegende Ausführungsbeispiel sei angenommen, dass der Modellgenerator MG die unterschiedlichen deterministischen Steuerungsagenten in Form von unterschiedlichen Sätzen von neuronalen Gewichten generiert.

Im Rahmen der Generierung der Steuerungsagenten wird ein Vergleich CMP1 zwischen verschiedenen generierten Steuerungsagenten durchgeführt. Bei diesem Vergleich CMP1 wird ein Abstand der betreffenden Steuerungsagenten untereinander ermittelt, der eine Verschiedenheit bzw. Ähnlichkeit der betreffenden Steuerungsagenten untereinander quantifiziert. Vorzugsweise wird als Abstand ein gegebenenfalls gewichteter euklidischer Abstand zwischen den neuronalen Gewichten der verglichenen Steuerungsagenten berechnet. Abhängig von den ermittelten Abständen werden durch den Modellgenerator MG bevorzugt diejenigen Steuerungsagenten ausgegeben, die einen größeren Abstand zu anderen generierten bzw. ausgegebenen Steuerungsagenten aufweisen. Auf diese Weise können Steuerungsagenten ausgegeben werden, die eine hohe Diversität oder Verschiedenheit aufweisen. Dies ermöglicht grundsätzlich eine bessere Exploration von weniger durch Trainingsdaten abgedeckten Bereichen eines Zustandsraums des technischen Systems TS. Weitere Verfahren zur Generierung von Steuerungsagenten mit hoher Diversität sind z.B. aus der Publikation "Promoting Diversity in Particle Swarm Optimization to Solve Multimodal Problems" von Cheng S., Shi Y. und Qin Q. in Neural Information Processing (eds: Lu BL., Zhang L., Kwok J.), ICONIP 2011, Lecture Notes in Computer Science, vol 7063, Springer, Berlin, Heidelberg, (https://doi.org/10.1007/978-3-642-24958-7_27), bekannt.

Im vorliegenden Ausführungsbeispiel werden durch den Modellgenerator MG eine Vielzahl unterschiedlicher deterministischer Steuerungsagenten P1, P2, ... generiert. Den generierten Steuerungsagenten P1, P2, ... werden eine Vielzahl von Zustandsdatensätzen S der Trainingsdaten als Eingabedaten zugeführt. Zu einem jeweiligen Zustandsdatensatz S gibt der Steuerungsagent P1 einen jeweiligen Aktionsdatensatz A1 und der Steuerungsagent P2 einen jeweiligen Aktionsdatensatz A2 aus. Die weiteren generierten Steuerungsagenten geben analog dazu weitere Aktionsdatensätze aus.

Ein jeweiliger Aktionsdatensatz A1 des Steuerungsagenten P1 wird in den Performanzbewerter PEV eingespeist, der für diesen Aktionsdatensatz A1 eine Gesamtperformanzwert RET1, wie oben beschrieben, prädiziert. Analog dazu ermittelt der Performanzbewerter PEV für einen jeweiligen Aktionsdatensatz A2 jeweils einen zugehörigen Gesamtperformanzwert RET2. Aktionsdatensätze weiterer generierter Steuerungsagenten werden analog verarbeitet.

Die prädizierten Gesamtperformanzwerte RET1, RET2... werden vom Performanzbewerter PEV in ein Selektionsmodul SEL der Steuereinrichtung CTL eingespeist. Das Selektionsmodul SEL dient dem Zweck, aus den generierten Steuerungsagenten P1, P2, ... performanzoptimierende Steuerungsagenten SP1, ..., SPK zu selektieren.

Zu diesem Zweck werden dem Selektionsmodul SEL auch die Steuerungsagenten P1, P2, **...** sowie das trainierte Maschinenlernmodul NN2 in Form von deren neuronalen Gewichten zugeführt (nicht dargestellt). Anhand der neuronalen Gewichte wird durch das Selektionsmodul SEL ein Vergleich CMP2 zwischen einem jeweiligen Steuerungsagenten P1, P2, **...** und dem trainierten Maschinenlernmodul NN2 durchgeführt. Bei diesem Vergleich CMP2 wird ein Abstand zwischen einem jeweiligen Steuerungsagenten P1, P2, **...** und dem trainierten Maschinenlernmodul NN2 ermittelt, der eine Verschiedenheit bzw. Ähnlichkeit des jeweiligen Steuerungsagenten P1, P2, **...** zum trainierten Maschinenlernmodul NN2 quantifiziert.

Die ermittelten Abstände werden jeweils mit einem vorgegebenen Schwellwert TH verglichen. Sofern ein jeweiliger Abstand den Schwellwert TH überschreitet, wird der betreffende Steuerungsagent von der Selektion durch das Selektionsmodul SEL ausgeschlossen. Auf diese Weise werden nur diejenigen der Steuerungsagenten P1, P2, **...** selektiert, die sich von dem trainierten Maschinenlernmodul NN2 nicht allzu sehr unterscheiden und mithin ein ähnliches Steuerverhalten aufweisen. Insofern das trainierte Maschinenlernmodul NN2 auf die Ausgabe von in den Trainingsdaten hinterlegten Steueraktionen trainiert ist, können somit Steuerungsagenten ausgeschlossen werden, die unzulässige oder schwer nachteilige Steueraktionen ausgeben.

Aus der verbleibenden Menge der zum Maschinenlernmodul NN2 ähnlichen Steuerungsagenten werden durch das Selektionsmodul SEL weiterhin diejenigen Steuerungsagenten selektiert, die zumindest im Mittel die größten Gesamtperformanzwerte aufweisen. Im vorliegenden Ausführungsbeispiel wird auf diese Weise eine Anzahl von K höchstperformanten Steuerungsagenten SP1, ... SPK durch das Selektionsmodul SEL selektiert und ausgegeben.

Die selektieren Steuerungsagenten SP1, **...** SPK werden dann, wie im Zusammenhang mit Figur 1 erläutert, zum Steuern des technischen Systems TS eingesetzt. Die selektierten Steuerungsagenten SP1, ... SPK können dabei insbesondere abwechselnd und/oder zyklisch die Steuerung des technischen Systems TS übernehmen. Insofern die selektierten Steuerungsagenten SP1, ... SPK deterministische Steuerungsagenten sind, wird das technische System TS deterministisch gesteuert, was eine Validierung der Steuerung gegenüber einer stochastischen Steuerung erheblich vereinfacht. Gleichzeitig erlaubt die Diversität der selektierten Steuerungsagenten SP1, ... SPK eine effiziente Exploration des Zustandsraums bzw. Aktionsraums des technischen Systems TS.

Während der Steuerung des technischen Systems TS durch die selektierten Steuerungsagenten SP1, ... SPK werden durch die Sensorik SK und ggf. durch zusätzliche Erfassungseinrichtungen weitere Zustandsdatensätze ES, Aktionsdatensätze EA, Folgezustandsdatensätze ES' sowie Performanzwerte ER für das technische System TS erfasst und zu den Trainingsdaten in der Datenbank DB hinzugefügt.

Mit den so ergänzten Trainingsdaten werden nun das Training der Maschinenlernmodule NN1 und NN2, die darauf basierende Generierung und Selektion der deterministischen Steuerungsagenten sowie die Ergänzung der Trainingsdaten iterativ wiederholt. Die selektierten Steuerungsagenten SP1, ... SPK können dabei zum Modellgenerator MG übermittelt werden, um im Sinne eines genetischen oder populationsbasierten Optimierungsverfahrens die Generierung von Steuerungsagenten im nächsten Iterationsschritt in Richtung der selektierten Steuerungsagenten SP1, ... SPK zu treiben. Weiterhin kann der Schwellwert TH von Wiederholung zu Wiederholung sukzessive erhöht werden, um größere Bereiche des Zustandsraums bzw. des Steueraktionsraums des technischen Systems TS zu erschließen. Auf diese Weise kann der Zustandsraum bzw. Steueraktionsraum effiziert exploriert und mit betriebsrelevanten Trainingsdaten angereichert werden.

Insbesondere kann die obige Iteration im Regelbetrieb des technischen Systems TS mitlaufen, um Steuerungsagenten fortlaufend an umgebungsbedingte oder verschleißbedingte Veränderungen des technischen Systems TS in optimierter Weise anzupassen. Darüber hinaus können so die Trainingsdaten in einer für diese Veränderungen repräsentativen Weise fortlaufend ergänzt werden.

Neben einer Selektion der Steuerungsagenten P1, P2, ... können diese auch im laufenden Betrieb anhand der Trainingsdatensätze TD darauf trainiert werden, zu einem jeweils eingespeisten Zustandsdatensatz S eine performanzoptimierende Steueraktion in Form eines Aktionsdatensatzes zu ermitteln. Zu diesem Zweck können - wie in Figur 5 durch strichlierte Pfeile angedeutet - die Gesamtperformanzwerte RET1 zum Steuerungsagenten P1 und die Gesamtperformanzwerte RET2 zum Steuerungsagenten P2 zurückgeführt werden. Entsprechendes gilt für weitere generierte Steuerungsagenten.

Die Verarbeitungsparameter, hier die neuronalen Gewichte eines jeweiligen Steuerungsagenten P1, P2,... werden dabei jeweils so eingestellt, bzw. konfiguriert, dass die jeweiligen Gesamtperformanzwerte zumindest im Mittel maximiert werden. Zur konkreten Durchführung des Trainings kann dabei auf eine Vielzahl von effizienten Standardverfahren zurückgegriffen werden. Durch das vorstehend beschriebene Training kann in vielen Fällen die Performanz der selektierten Steuerungsagenten SP1, ..., SPK weiter verbessert werden.

## Patentansprüche

1. Computerimplementiertes Verfahren zum Steuern eines technischen Systems (TS), wobei
a) Trainingsdaten eingelesen werden, wobei ein jeweiliger Trainingsdatensatz (TD) einen einen Zustand des technischen Systems spezifizierenden Zustandsdatensatz (S), einen eine Steueraktion spezifizierenden Aktionsdatensatz (A) sowie einen aus einer Anwendung der Steueraktion resultierenden Performanzwert (R) des technischen Systems umfasst,
b) ein erstes Maschinenlernmodul (NN1) anhand der Trainingsdaten darauf trainiert wird, anhand eines Zustandsdatensatzes (S) und eines Aktionsdatensatzes (A) einen resultierenden Performanzwert (R) zu reproduzieren,
c) einer Vielzahl von unterschiedlichen deterministischen Steuerungsagenten (P1, P2,...) jeweils Zustandsdatensätze (S) zugeführt werden und resultierende Ausgabedaten als Aktionsdatensätze in das trainierte erste Maschinenlernmodul (NN1) eingespeist werden,
d) abhängig von durch das trainierte erste Maschinenlernmodul (NN1) ausgegebenen Performanzwerten mehrere der Steuerungsagenten selektiert werden,
e) das technische System durch die selektierten Steuerungsagenten (SP1,...,SPK) jeweils gesteuert wird, wobei weitere Zustandsdatensätze (ES), Aktionsdatensätze (EA) und Performanzwerte (ER) erfasst und zu den Trainingsdaten hinzugefügt werden, und
f) die Verfahrensschritte b) bis e) mit den so ergänzten Trainingsdaten wiederholt werden.

2. Verfahren nach Anspruch 1, **dadurch gekennzeichnet, dass**
- ein zweites Maschinenlernmodul (NN2) darauf trainiert ist oder anhand der Trainingsdaten darauf trainiert wird, anhand eines Zustandsdatensatzes (S) einen Aktionsdatensatz (A) zu reproduzieren,
- die Steuerungsagenten (P1, P2,...) jeweils mit dem zweiten Maschinenlernmodul (NN2) verglichen werden, wobei jeweils ein eine Verschiedenheit zwischen dem jeweiligen Steuerungsagenten (P1, P2,...) und dem zweiten Maschinenlernmodul (NN2) quantifizierender Abstand ermittelt wird, und
- ein Steuerungsagent mit einem kleineren Abstand zum zweiten Maschinenlernmodul (NN2) gegenüber einem Steuerungsagenten mit einem größeren Abstand bevorzugt selektiert wird.

3. Verfahren nach Anspruch 2, **dadurch gekennzeichnet,**
**dass** der Abstand eines jeweiligen Steuerungsagenten mit einem Schwellwert (TH) verglichen wird, und
**dass** der jeweilige Steuerungsagent von der Selektion ausgeschlossen wird, falls der Schwellwert (TH) überschritten wird.

4. Verfahren nach Anspruch 3, **dadurch gekennzeichnet,**
**dass** der Schwellwert (TH) bei der Wiederholung der Verfahrensschritte erhöht wird.

5. Verfahren nach einem der Ansprüche 2 bis 4, **dadurch gekennzeichnet,**
**dass** das zweite Maschinenlernmodul (NN2) sowie die Steuerungsagenten (P1, P2,...) künstliche neuronale Netze sind, und
**dass** eine Abweichung zwischen neuronalen Gewichten des zweiten Maschinenlernmoduls (NN2) und neuronalen Gewichten eines jeweiligen Steuerungsagenten ermittelt und durch den jeweiligen Abstand quantifiziert wird.

6. Verfahren nach einem der vorhergehenden Ansprüche, **dadurch gekennzeichnet, dass**
- die Vielzahl von Steuerungsagenten (P1, P2,...) durch einen Modellgenerator (MG) generiert wird,
- mehrere der generierten Steuerungsagenten mit anderen Steuerungsagenten verglichen werden, wobei jeweils ein eine Verschiedenheit zwischen den verglichenen Steuerungsagenten quantifizierender Abstand ermittelt wird, und
- ein Steuerungsagent mit einem größeren Abstand zu einem oder mehreren anderen Steuerungsagenten gegenüber einem Steuerungsagenten mit einem kleineren Abstand bevorzugt selektiert wird.

7. Verfahren nach einem der vorhergehenden Ansprüche, **dadurch gekennzeichnet, dass**
die Steuerungsagenten (P1, P2,...) anhand der Trainingsdaten darauf trainiert werden, anhand eines Zustandsdatensatzes (S) einen eine performanzoptimierende Steueraktion spezifizierenden Aktionsdatensatz zu reproduzieren.

8. Verfahren nach einem der vorhergehenden Ansprüche, **dadurch gekennzeichnet, dass**
- ein jeweiliger Trainingsdatensatz (TD) einen Folgezustandsdatensatz (S') umfasst, der einen aus einer Anwendung einer Steueraktion resultierenden Folgezustand des technischen Systems (TS) spezifiziert,
- das erste Maschinenlernmodul (NN1) anhand der Trainingsdaten darauf trainiert wird, anhand eines Zustandsdatensatzes (S) und eines Aktionsdatensatzes (A) einen resultierenden Folgezustandsdatensatz (S') zu reproduzieren,
- ein zweites Maschinenlernmodul (NN2) anhand der Trainingsdaten darauf trainiert wird, anhand eines Zustandsdatensatzes (S) einen Aktionsdatensatz (A) zu reproduzieren,
- durch das trainierte erste Maschinenlernmodul (NN1) für einen vom jeweiligen Steuerungsagenten ausgegebenen Aktionsdatensatz ein Folgezustandsdatensatz (S') ermittelt und in das trainierte zweite Maschinenlernmodul (NN2) eingespeist wird,
- ein daraus resultierender Folgeaktionsdatensatz (A') zusammen mit dem Folgezustandsdatensatz (S') in das trainierte erste Maschinenlernmodul (NN1) eingespeist wird, und
- ein daraus resultierender Performanzwert (R') für den Folgezustand bei der Selektion der Steuerungsagenten (P1, P2,...) berücksichtigt wird.

9. Verfahren nach einem der vorhergehenden Ansprüche, **dadurch gekennzeichnet, dass**
zur Selektion und/oder zu einer Generierung der Steuerungsagenten (P1, P2,...) ein populationsbasiertes Optimierungsverfahren, ein gradientenfreies Optimierungsverfahren, eine Partikelschwarmoptimierung und/oder ein genetisches Optimierungsverfahren verwendet wird.

10. Verfahren nach einem der vorhergehenden Ansprüche, **dadurch gekennzeichnet,**
**dass** das erste Maschinenlernmodul (NN1), ein zweites Maschinenlernmodul (NN2) und/oder die Steuerungsagenten (P1, P2,...) ein künstliches neuronales Netz, ein rekurrentes neuronales Netz, ein faltendes neuronales Netz, ein mehrlagiges Perzeptron, ein bayessches neuronales Netz, einen Autoencoder, einen variationalen Autoencoder, einen Gauß-Prozess, eine Deep-Learning-Architektur, eine Support-Vektor-Maschine, ein datengetriebenes trainierbares Regressionsmodell, einen k-nächste-Nachbarn-Klassifikator, ein physikalisches Modell und/oder einen Entscheidungsbaum umfassen.

11. Verfahren nach einem der vorhergehenden Ansprüche, **dadurch gekennzeichnet,**
**dass** das technische System (TS) eine Gasturbine, eine Windturbine, eine Dampfturbine, ein chemischer Reaktor, eine Fräsmaschine, eine Werkzeugmaschine, eine Fertigungsanlage, eine Fabrik, ein Roboter, ein Motor, eine Kühlanlage, eine Heizungsanlage oder eine andere Maschine, ein anderes Gerät oder eine andere Anlage ist.

12. Steuereinrichtung (CTL) zum Steuern eines technischen Systems (TS) mit Mitteln zum Ausführen der Schritte eines Verfahrens nach einem der vorhergehenden Ansprüche.

13. Computerprogrammprodukt umfassend Befehle, die bei der Ausführung des Programms durch einen Computer eine Steuereinrichtung nach Anspruch 12 dazu veranlassen, ein Verfahren nach einem der Ansprüche 1 bis 11 auszuführen.

14. Computerlesbares Speichermedium mit einem Computerprogrammprodukt nach Anspruch 13.

## Claims

1. Computer-implemented method for controlling a technical system (TS), wherein
a) training data are read in, a respective training dataset (TD) comprising a state dataset (S) that specifies a state of the technical system, an action dataset (A) that specifies a control action, and a performance value (R) of the technical system that results from an application of the control action,
b) a first machine learning module (NN1) is trained, using the training data, to use a state dataset (S) and an action dataset (A) to reproduce a resulting performance value (R),
c) a multiplicity of different deterministic control agents (P1, P2,...) are each supplied with state datasets (S), and resulting output data are fed into the trained first machine learning module (NN1) as action datasets,
d) performance values output by the trained first machine learning module (NN1) are taken as a basis for selecting multiple instances of the control agents,
e) the technical system is respectively controlled by the selected control agents (SP1, ..., SPK), with further state datasets (ES), action datasets (EA) and performance values (ER) being captured and added to the training data, and
f) method steps b) to e) are repeated using the thus augmented training data.

2. Method according to Claim 1, **characterized in that**
- a second machine learning module (NN2) is trained, or is trained using the training data, to use a state dataset (S) to reproduce an action dataset (A),
- the control agents (P1, P2,...) are each compared with the second machine learning module (NN2), a respective distance that quantifies a dissimilarity between the respective control agent (P1, P2,...) and the second machine learning module (NN2) being ascertained, and
- a control agent having a lesser distance from the second machine learning module (NN2) is selected preferentially over a control agent having a greater distance.

3. Method according to Claim 2, **characterized**
**in that** the distance of a respective control agent is compared with a threshold value (TH), and
**in that** the respective control agent is excluded from the selection if the threshold value (TH) is exceeded.

4. Method according to Claim 3, **characterized in that** the threshold value (TH) is increased when the method steps are repeated.

5. Method according to one of Claims 2 to 4, **characterized**
**in that** the second machine learning module (NN2) and the control agents (P1, P2,...) are artificial neural networks, and
**in that** a divergence between neural weights of the second machine learning module (NN2) and neural weights of a respective control agent is ascertained and is quantified by the respective distance.

6. Method according to one of the preceding claims, **characterized in that**
- the multiplicity of control agents (P1, P2,...) are generated by a model generator (MG),
- multiple instances of the generated control agents are compared with other control agents, a respective distance that quantifies a dissimilarity between the compared control agents being ascertained, and
- a control agent having a greater distance from one or more other control agents is selected preferentially over a control agent having a lesser distance.

7. Method according to one of the preceding claims, **characterized in that**
the control agents (P1, P2,...) are trained, using the training data, to use a state dataset (S) to reproduce an action dataset that specifies a performance-optimizing control action.

8. Method according to one of the preceding claims, **characterized in that**
- a respective training dataset (TD) comprises a subsequent state dataset (S') that specifies a subsequent state of the technical system (TS) resulting from an application of a control action,
- the first machine learning module (NN1) is trained, using the training data, to use a state dataset (S) and an action dataset (A) to reproduce a resulting subsequent state dataset (S'),
- a second machine learning module (NN2) is trained, using the training data, to use a state dataset (S) to reproduce an action dataset (A),
- the trained first machine learning module (NN1) ascertains a subsequent state dataset (S') for an action dataset output by the respective control agent and feeds said subsequent state dataset into the trained second machine learning module (NN2),
- a resultant subsequent action dataset (A') is fed into the trained first machine learning module (NN1) together with the subsequent state dataset (S'), and
- a resultant performance value (R') for the subsequent state is taken into consideration for the selection of the control agents (P1, P2,...).

9. Method according to one of the preceding claims, **characterized in that**
the control agents (P1, P2,...) are selected and/or generated using a population-based optimization method, a gradient-free optimization method, a particle swarm optimization and/or a genetic optimization method.

10. Method according to one of the preceding claims, **characterized**
**in that** the first machine learning module (NN1), a second machine learning module (NN2) and/or the control agents (P1, P2,...) comprise an artificial neural network, a recurrent neural network, a convolutional neural network, a multilayer perceptron, a Bayesian neural network, an autoencoder, a variational autoencoder, a Gaussian process, a deep learning architecture, a support vector machine, a data-driven trainable regression model, a k nearest neighbours classifier, a physical model and/or a decision tree.

11. Method according to one of the preceding claims, **characterized**
**in that** the technical system (TS) is a gas turbine, a wind turbine, a steam turbine, a chemical reactor, a milling machine, a machine tool, a production plant, a factory, a robot, a motor, a cooling plant, a heating plant or another machine, another device or another plant.

12. Control device (CTL) for controlling a technical system (TS) having means for carrying out the steps of a method according to one of the preceding claims.

13. Computer program product comprising commands which cause a control device according to Claim 12 to carry out a method according to one of claims 1 to 11 when the program is run by a computer.

14. Computer-readable storage medium having a computer program product according to Claim 13.

## Revendications

1. Procédé mis en œuvre par ordinateur destiné à la commande d'un système technique (TS), dans lequel
a) des données d'entraînement sont lues, dans lequel un jeu de données d'entraînement (TD) respectif comprend un jeu de données d'état (S) spécifiant un état du système technique, un jeu de données d'action (A) spécifiant une action de commande ainsi qu'une valeur de performances (R) du système technique résultant d'une application de l'action de commande,
b) un premier module d'apprentissage machine (NN1) est entraîné à l'aide des données d'entraînement pour reproduire à l'aide d'un jeu de données d'état (S) et d'un jeu de données d'action (A) une valeur de performances (R) qui en résulte,
c) des jeux de données d'état (S) sont respectivement délivrés à une pluralité d'agents de commande déterministes différents (P1, P2, ...) et des données de sortie qui en résultent sont injectées dans le premier module d'apprentissage machine (NN1) entraîné en tant que jeux de données d'action,
d) en fonction de valeurs de performances sorties par le biais du premier module d'apprentissage machine (NN1) entraîné plusieurs des agents de commande sont sélectionnés,
e) le système technique est commandé respectivement par le biais des agents de commande (SP1, ..., SPK) sélectionnés, dans lequel d'autres jeux de données d'état (ES), jeux de données d'action (EA) et valeurs de performances (ER) sont acquis et ajoutés aux données d'entraînement, et
f) les étapes de procédé b) à e) sont répétées avec les données d'entraînement ainsi complétées.

2. Procédé selon la revendication 1, **caractérisé en ce que**
- un second module d'apprentissage machine (NN2) est entraîné ou entraîné à l'aide des données d'entraînement, pour reproduire un jeu de données d'action (A) à l'aide d'un jeu de données d'état (S),
- les agents de commande (P1, P2, ...) sont respectivement comparés au second module d'apprentissage machine (NN2), dans lequel respectivement un écart quantifiant une différence entre les agents de commande (P1, P2, ...) respectifs et le second module d'entraînement machine (NN2) est déterminé, et
- un agent de commande avec un écart plus petit par rapport au second module d'apprentissage machine (NN2) est de préférence sélectionné par rapport à un agent de commande avec un écart plus grand.

3. Procédé selon la revendication 2, **caractérisé en ce que** l'écart d'un agent de commande respectif est comparé à une valeur de seuil (TH), et
**en ce que** l'agent de commande respectif est exclu de la sélection dans le cas où la valeur de seuil (TH) est dépassée.

4. Procédé selon la revendication 3, **caractérisé en ce que** la valeur de seuil (TH) est relevée lors de la répétition des étapes de procédé.

5. Procédé selon l'une quelconque des revendications 2 à 4, **caractérisé en ce que**
le second module d'apprentissage machine (NN2) ainsi que les agents de commande (P1, P2, ...) sont des réseaux de neurones artificiels, et
**en ce qu'**une différence entre des poids neuronaux du second module d'apprentissage machine (NN2) et des poids neuronaux d'un agent de commande respectif est déterminée et quantifiée par le biais de l'écart respectif.

6. Procédé selon l'une quelconque des revendications précédentes, **caractérisé en ce que**
- la pluralité d'agents de commande (P1, P2, ...) sont générés par le biais d'un générateur de modèles (MG),
- plusieurs des agents de commande générés sont comparés à d'autres agents de commande, dans lequel respectivement un écart quantifiant une différence entre les agents de commande comparés est déterminé, et
- un agent de commande avec un écart plus grand par rapport à un ou plusieurs autres agents de commande par rapport à un agent de commande avec un écart plus petit est de préférence sélectionné.

7. Procédé selon l'une quelconque des revendications précédentes, **caractérisé en ce que**
les agents de commande (P1, P2, ...) sont entraînés à l'aide des données d'entraînement pour reproduire à l'aide d'un jeu de données d'état (S) un jeu de données d'action spécifiant une action de commande optimisant les performances.

8. Procédé selon l'une quelconque des revendications précédentes, **caractérisé en ce que**
- un jeu de données d'entraînement (TD) respectif comprend un jeu de données d'état ultérieur (S') qui spécifie un état ultérieur du système technique (TS) résultant d'une application d'une action de commande,
- le premier module d'apprentissage machine (NN1) est entraîné à l'aide des données d'entraînement pour reproduire à l'aide d'un jeu de données d'état (S) et d'un jeu de données d'action (A) un jeu de données d'état ultérieur (S') qui en résulte,
- un second module d'apprentissage machine (NN2) est entraîné à l'aide des données d'entraînement pour reproduire un jeu de données d'action (A) à l'aide d'un jeu de données d'état (S),
- un jeu de données d'état ultérieur (S') est déterminé par le biais du premier module d'apprentissage machine (NN1) entraîné pour un jeu de données d'action émises par l'agent de commande respectif et injecté dans le second module d'apprentissage machine (NN2) entraîné,
- un jeu de données d'action ultérieur (A') qui en résulte est injecté conjointement avec le jeu de données d'état ultérieur (S') dans le premier module d'apprentissage machine (NN1), et
- une valeur de performances (R') qui en résulte est prise en compte pour l'état ultérieur lors de la sélection des agents de commande (P1, P2, ...) .

9. Procédé selon l'une quelconque des revendications précédentes, **caractérisé en ce que**
pour la sélection et/ou pour une génération des agents de commande (P1, P2, ...) un procédé d'optimisation basé sur la population, un procédé d'optimisation exempt de gradients, une optimisation de nuées de particules et/ou un procédé d'optimisation génétique sont utilisés.

10. Procédé selon l'une quelconque des revendications précédentes, **caractérisé en ce que**
le premier module d'apprentissage machine (NN1), un second module d'apprentissage machine (NN2) et/ou les agents de commande (P1, P2, ...) comprennent un réseau de neurones artificiels, un réseau de neurones récurrents, un réseau à plissement de neurones, un perceptron à couches multiples, un réseau de neurones bayésien, un autoencodeur, un autoencodeur variationnel, un processus gaussien, une architecture d'apprentissage profond, une machine à vecteurs de support, un modèle de régression entraînable actionné par donnés, un classifieur du kième plus proche voisin, un modèle physique et/ou un arbre de décision.

11. Procédé selon l'une quelconque des revendications précédentes, **caractérisé en ce que**
le système technique (TS) est une turbine à gaz, une turbine éolienne, une turbine à vapeur, un réacteur chimique, une fraiseuse, une machine-outil, une installation de production, un site de production, un robot, un moteur, une installation de réfrigération, une installation de chauffage ou une autre machine, un autre appareil ou une autre installation.

12. Dispositif de commande (CTL) destiné à la commande d'un système technique (TS) avec des moyens destinés à la réalisation des étapes d'un procédé selon l'une quelconque des revendications précédentes.

13. Produit de programme informatique comprenant des instructions qui, lors de la réalisation du programme par le biais d'un ordinateur amènent un dispositif de commande selon la revendication 12 à réaliser un procédé selon l'une quelconque des revendications 1 à 11.

14. Support de mémoire lisible par ordinateur avec un produit de programme informatique selon la revendication 13.
